# EUROPÄISCHE PATENTSCHRIFT

(11) **EP 1 970 584 B1**
(45) Veröffentlichungstag und Bekanntmachung des Hinweises auf die Patenterteilung: **03.07.2013**
(21) Anmeldenummer: 08004641.0
(22) Anmeldetag: 13.03.2008
(51) Int. Cl.: F16C 29/06, F16C 33/66, F16C 35/06

(54) **Linearwälzlager**
Linear roller bearing
Palier à roulement linéaire

(30) Priorität: 16.03.2007 DE 102007012649
(43) Veröffentlichungstag der Anmeldung: 17.09.2008
(73) Patentinhaber: AB SKF, 415 50 Göteborg (SE)
(72) Erfinder: Mayer, Uwe, 97702 Münnerstadt (DE); Stahl, Erwin, 97714 Rottershausen (DE); Velde, Henryk, 97440 Werneck (DE); Warsch, Thorsten, 97247 Untereisenheim (DE); Wiesenau, Doreen, 97525 Schwebheim (DE)
(74) Vertreter: Kohl, Thomas

(56) Entgegenhaltungen:
- EP-A1- 0 390 156
- EP-A1- 0 456 082
- EP-A2- 0 608 832
- DE-B- 1 287 382
- JP-A- 10 299 768
- SKF: "Linear Bearings and Units - Technical Handbook", , 1. Dezember 2006 (2006-12-01), Seiten 1-60, XP002670758, Gefunden im Internet: URL:http://www.skf.com/files/597937.pdf [gefunden am 2012-03-01]

## Beschreibung

Die Erfindung betrifft ein Linearwälzlager.

Beispielsweise aus der DE 40 15 124 A1 ist ein Kugellager für Längsbewegungen bekannt, dass einen mit seiner Innenfläche eine Welle umgebenden Käfig besitzt. Der Käfig hat dabei axiale Führungsbahnen für belastete Kugeln und axiale Rückführbahnen für unbelastete Kugeln sowie jeweils einen Deckel an jedem seiner beiden Enden. Jeder Deckel hat Umlenkbahnen, die jeweils eine Führungsbahn mit einer Rückführbahn endseitig verbindet. An den beiden axialen Enden sind weiterhin Dichtungen in den Käfig eingesetzt.

Aus dem technischen Handbuch "Linear bearings and units" der SKF aus dem Jahre 2006, insbesondere dessen Seiten 31 bis 33, ist es bekannt, dass bestimmte Linearlagertypen so einzubauen sind, dass eine Belastungsrichtung in einen Sektor fällt, der am Ende des Linearlagerkäfigs angezeigt ist.

Eine Aufgabe der Erfindung ist es, ein verbessertes Linearwälzlager zu schaffen.

Die Aufgabe wird durch den Gegenstand des Anspruchs 1 gelöst. Vorteilhafte Ausgestaltungen sind in den Unteransprüchen beschrieben.

Durch die beiden Markierungen wird die winkelpositionsrichtige Montage des Linearkugellagers sowohl hinsichtlich der Hauptlastrichtung als auch hinsichtlich der Umfangsstelle für ein verdrehsicheres Befestigen und/oder ein Nachschmieren erheblich erleichtert.

Weitere Vorteile, Merkmale und Einzelheiten der Erfindung ergeben sich aus den im folgenden beschriebenen Ausführungsbeispielen der Erfindung anhand der Figuren. Dabei zeigen:
- Figur 1: in perspektivischer Ansicht ein teilzusammengebautes, in Umfangsrichtung in sich geschlossenes, hohlzylinderartiges Linearkugellager,
- Figur 2: in perspektivischer Ansicht ein Umlenkelement des Linearkugellagers der Figur 1,
- Figur 3: in perspektivischer Ansicht einen Schmierstoffspeicher des Linearkugellagers der Figur 1,
- Figur 4: in perspektivischer Ansicht ein Deckelement für das Linearkugellager der Figur 1,
- Figur 5: einen ausschnittsweisen Längsschnitt durch eine zwischen einem Umlenk- und einem Deckelement angeordnete Dichtung,
- Figur 6: in perspektivischer Ansicht das zusammengebaute Linearkugellager der Figur 1,
- Figuren 7 und 8: in der Figur 6 mit A und B bezeichnete Ausschnittsvergrößerungen der Figur 6,
- Figur 9: in perspektivischer Ansicht ein in Umfangsrichtung unterbrochenes Linearkugellager,
- Figur 10: eine Frontansicht einer Dichtung für das Linearkugellager der Figur 9,
- Figur 11: einen Längsschnitt durch die Dichtung der Figur 10 und
- Figur 12: eine in der Figur 11 mit D bezeichnete Ausschnitlswergrößerung der Figur 11.

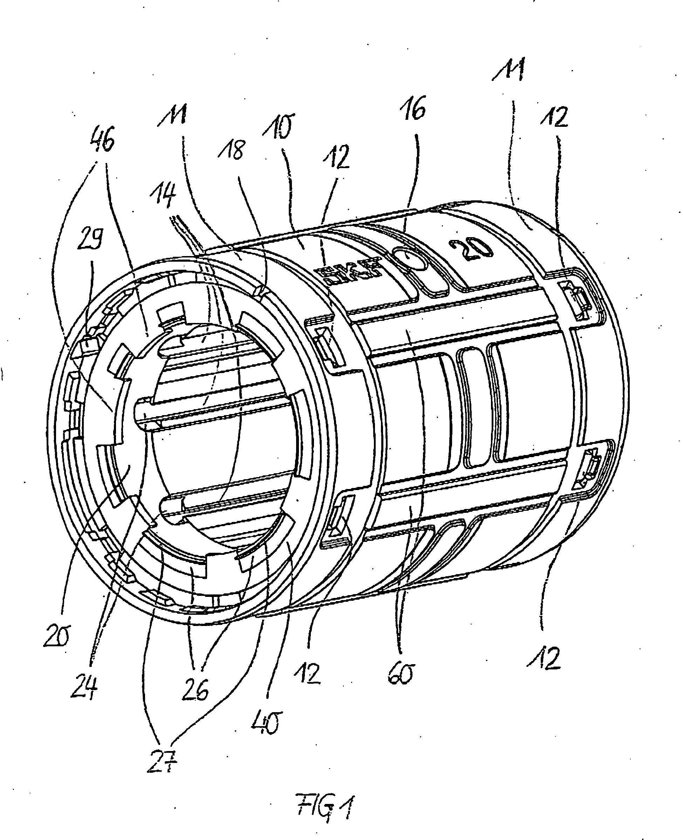

Die Figur 1 zeigt als ein Ausführungsbeispiel der Erfindung in perspektivischer Ansicht Elemente 10, 20 und 30 eines Linearkugellagers mit mehreren, zum endlosen Umlaufen vorgesehenen Kugelreihen. Durch die Höhlung des in der Figur 1 dargestellten Linearkugellagers ist eine Achse oder Welle zum Hindurchführen vorgesehen, so dass über die lasttragenden Kugeln und Laufbahneinlagen 60 das Linearkugellager gegenüber der Achse oder Welle wenigstens längsverschieblich ist. Lediglich aus Gründen der Übersichtlichkeit sind die Kugeln wie auch die Achse oder Welle nicht dargestellt.

Dabei umfasst das Lincarkugellager ein hohlzylinderartiges Grundelement 10 mit im wesentlichen geradlinigen Führungen 14 für die belasteten und unbelasteten Kugeln sowie Aufnahmeöffnungen für Laufbahneinlagen 60, so dass die belasteten Kugeln einerseits auf der Achse oder Welle und andererseits auf den Laufbahneinlagen 60 abrollen. Dabei können wie in Figur 1 dargestellt, die Laufbahneinlagen 60 nach außen hin entsprechend einem Längsstreifen eines Zylindermantels ausgebildet sein, wobei in anderen Ausführungsformen auch Laufbahnelemente zum Einsatz kommen können, deren äußerer, mittlerer Bereich eine radial nach außen gerichtete Ausbauchung aufweist, wodurch mit dem Linearkugellager dann Fluchtungsfehler bis zu einem gewissen Grad ausgeglichen werden können. Dabei können aber mit Vorteil ein und dieselben Elemente 10, 20 und 30 sowohl für die winkeleinstellbare als auch für eine vergleichbare, nicht winkeleinstellbare Ausführung verwendet werden.

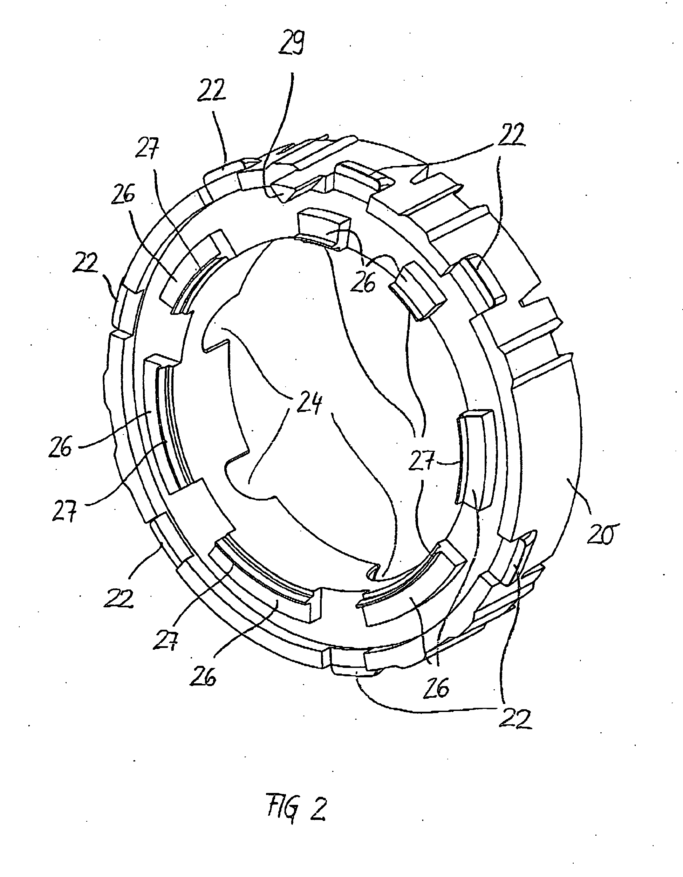

An beiden axialen Enden ist das Grundelement 10 gleichartig ausgebildet. Im folgenden wird die Beschaffenheit im Bereich der axialen Enden ausschließlich bezugnehmend auf das linke axiale Ende erläutert, wobei dies entsprechend natürlich auch für das andere axiale Ende gilt. Dabei ist besagtes axiales Ende des Grundelements 10 im Bereich des Außenmantels des Grundelements 10 mit einer derartigen axialen Auskragung 11 ausgebildet, dass in die Höhlung der Auskragung 11 ein Umlenkelement 20 und ein Deckelement 30 einschnappbar sind. In der Figur 1 ist das Umlenkelement 20 im eingeschnappten Zustand dargestellt. Die Figur 2 zeigt ebenfalls in perspektivischer Ansicht das Umlenkelement 20 in Alleinstellung.

Das Umlenkelement 20 umfasst dabei halbkreisartig ausgebildete Führungen 24 mittels derer die Kugeln zwischen den geradlinigen Führungen 14 im Grundelement 10 für die belasteten und unbelasteten Kugeln umgelenkt werden. Die Auskragung 11 ist für besagtes Einschnappen mit die Auskragung 11 radial durchdringenden Öffnungen 12 ausgebildet, in die entsprechende radiale Fortsätze 22 des Umlenkelements 20 zum Einschnappen vorgesehen sind. Dabei sind die Öffnungen 12 und die Fortsätze 22 derart aufeinander abgestimmt angeordnet und ausgebildet, dass das Grundelement 10 und das Umlenkelement 20 nur in einer vorgebbaren Verdrchposition miteinander verbindbar sind, so dass sich die Führungen 24 im Umlenkelement 20 passgenau an die des Grundelements 10 anschließen. Bei der Montage wird dabei das Umlenkelement 10 axial von links in die Auskragung 11 hineingedrückt und schnappt dann entsprechend ein.

Weiterhin ist das Umlenkelement 20 an der nach außen gerichteten Stirnseite in einem inneren Randbereich mit sektorartigen axialen Fortsätzen 26 ausgebildet, so dass zwischen den sektorartigen Fortsätzen 26 und diese gleichzeitig umschließend, ein ringartiger Schmierstoffspeicher 40 einsetzbar ist. Passgenau zwischen den sektorartigen Fortsätzen 26 des Umlenkelements 20 weist der Schmierstoffspeicher 40 zwischen den scktorartigen Fortsätzen 26 radial nach innen, hin zur Achse oder Welle auskragende Fortsätze 46 auf, die einem Schmieren der Achse oder Welle ausschließlich in denjenigen Bereichen dienen, auf denen die Kugeln zum Abrollen vorgesehen sind. Damit ist klar, dass auch die sektorartigen Fortsätze 26 am Umlenkelement 20 derart platziert sind, dass die radial nach innen hin auskragenden Fortsätze 46 des Schmierstoffspeichers 40 vorgenannter Bedingung genügen. Weiterhin sind die sektorartigen Fortsätze 26 am Umlenkelement 20 und die radialen Fortsätze 46 am Schmierstoffspeicher 40 derart aufeinander abgestimmt angeordnet und ausgebildet, dass eine bezüglich der gegenseitigen Verdrehposition richtige Montage sozusagen erzwungen wird.

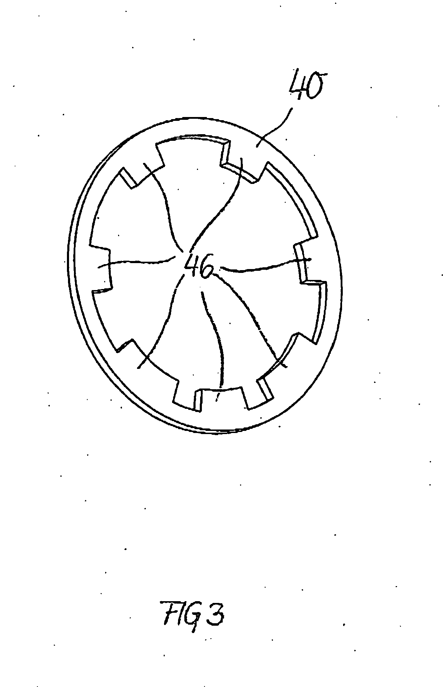

In der Figur 1 ist der Schmierstoffspeicher 40 in in das Umlenkelement 20 eingelegtem Zustand dargestellt, wohingegen er in Figur 3 nochmals in Alleinstellung perspektivisch dargestellt ist. Dabei kann der Schmierstoffspeicher 40 aus einem porösen Material, beispielsweise Schaumstoff, ausgebildet sein und als Schmierstoff ein Öl dienen, mit dem der Schaumstoff getränkt ist. Dadurch, dass ausschließlich Bereiche geschmiert werden, auf denen die Kugeln auf der Achse oder Welle abrollen, wird mit Vorteil dic Gebrauchsdauer des einmal mit Schmierstoff gefüllten Schmierstoffspeichers 40 deutlich erhöht, bis hin zu einer Lebensdauerschmicrung. In anderen Ausführungen kann aber auch eine Ausführung, bei der Öl in einer polymeren Matrix gehalten ist, was auch unter dem Stichwort "Solid Oil" bekannt ist, verwendet und/oder nachgeschmiert werden.

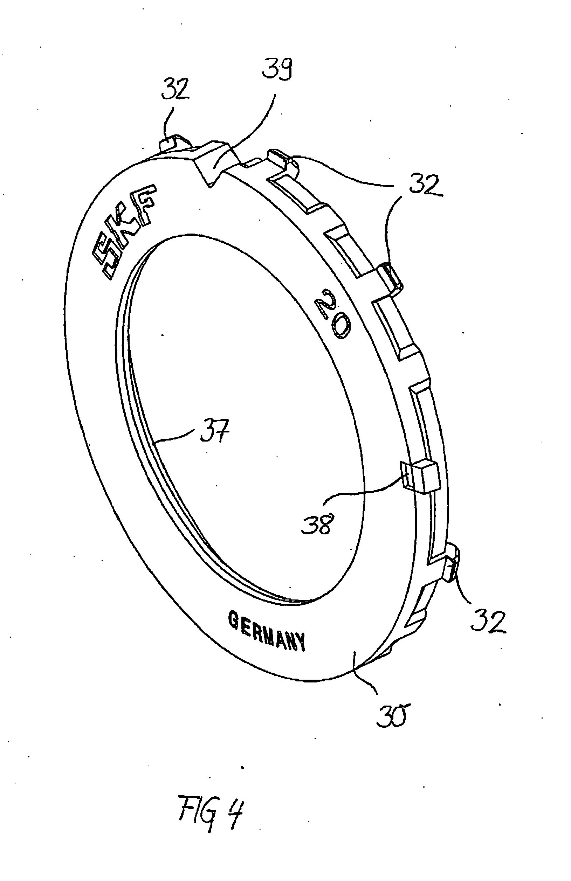

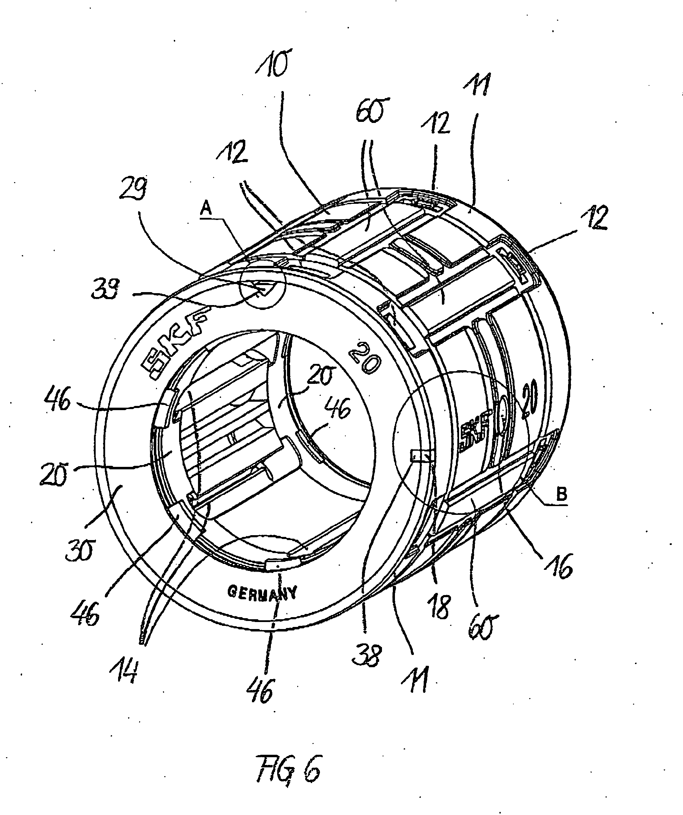

Abgeschlossen wird das in der Figur 1 dargestellte Linearkugellager schließlich dadurch, dass von der linken Seite her noch das in der Figur 4 dargestellte Deckelement 30 in die Auskragung 11 des Grundelements 10 eingeschnappt wird, so dass sich das Linearkugellager entsprechend Figur 6 ergibt. Dabei wird das Deckelement 30 in die gleichen Öffnungen 12 der Auskragung 11 eingeschnappt, wozu auch das Deckelement 30 entsprechend ausgebildete radiale Fortsätze 32 aufweist. Dabei sind natürlich auch die radialen Fortsätze 32 am Deckelement 30 und die Öffnungen 12 der Auskragung 11 derart aufeinander abgestimmt angeordnet und ausgebildet, dass eine bezüglich der gegenseitigen Verdrehposition richtige Montage sozusagen erzwungen wird.

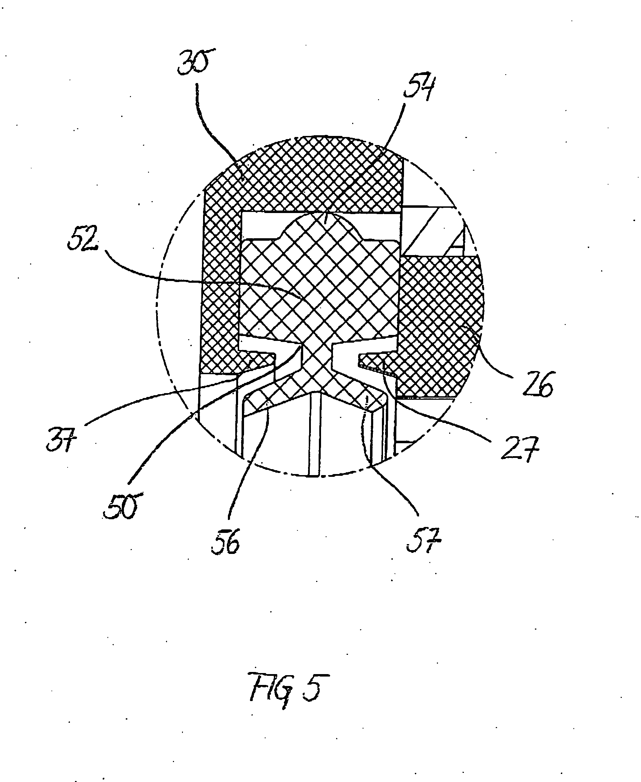

In der Figur 6 zwar nicht dargestellt, kann aber zwischen das Umlenkelement 20 und das Deckelement 30 gemäß Figur 5 auch eine Dichtung 50 mit angeordnet werden, die einem Abdichten des Linearkugellagers gegenüber der Achse oder Welle dient. Dabei zeigt die Figur 5 ausschnittsweise einen Längsschnitt der zwischen dem Umlenkelement 20 und dem Deckelement 30 angeordneten Dichtung 50. Die Dichtung 50 ist dabei als ein in sich geschlossener Ring ausgebildet. Die Dichtung 50 ist materialeinheitlich und einstückig aus einem Elastomermaterial hergestellt. Der Längsschnitt der Dichtung 50 weist dabei einen rechteckartigen Grundbereich 52 auf, an dem sich radial nach außen hin ein ringartig umlaufender Wulst 54 anschließt und an dessen Innenmantel sich eine schräg nach außen und eine schräg nach innen auskragende Dichtlippe 56 und 57 anschließen.

Weiterhin sind die sektorartigen axialen Fortsätze 26 des Umlenkelements 20 mit axial auskragenden Nasen 27 versehen, die zum Eingreifen zwischen besagtem rechteckförmigen Grundbereich 52 und der schräg nach innen hin weisenden Dichtlippe 57 vorgesehen sind. Ebenso ist das Deckelement 30 innenmantelseitig mit einer ringartig umlaufenden, axial nach innen hin auskragenden Nase 37 ausgebildet, die zum Eingreifen zwischen dem rechteckartigen Grundbereich 52 der Dichtung 50 und der schräg nach außen hin auskragenden Dichtlippe 56 der Dichtung 50 zum Eingriff vorgesehen ist. Damit wird mit besonderem Vorteil besagte Dichtung 50 sicher geführt, gehalten und zentriert. Durch die beiden Dichtlippen 56 und 57 und die Außengeometrie des Grundelements 10 wird dabei auch bei Fluchtungsfchlern zwischen dem Linearkugellager und der Achse oder Welle, also auch bei Winkelfehlern, eine gute Dichtwirkung erzielt, so dass Verschmutzungen vom Inneren des Linearkugellagers ferngehalten werden und ein vorhandener Schmierstoff im Inneren des Linearkugellagers gehalten wird.

Wie den Figuren 1 und 6 entnommen werden kann, ist das Grundelement 10 des Linearkugellagers weiterhin in einem Mittenbcreich mit einer Vertiefung 16 ausgebildet, die einem axial- und verdrehgesicherten Befestigen gegenüber einer Einbauumgebung dient und gleichzeitig als Schmiernippel für ein Nachschmieren des Linearkugellagers genutzt werden kann. Gleichzeitig ist diese Umfangsstelle für das verdrehsichere Befestigen stirnseitig sowohl an der Stirnseite der Auskragung 11 des Grundelements 10 als auch am Deckelement 30 durch entsprechende Markierungen 18 und 38 gekennzeichnet, was die winkelpositionsrichtige Montage des Linearkugellagers erheblich vereinfacht. Dabei schließt sich an die als Vertiefung ausgebildete Markierung 38 am Deckelement 30 ein radialer Fortsatz an, der zum Eingreifen in die als Aussparung ausgebildete Markierung 18 an der Auskragung 11 entsprechend passgenau ausgebildet ist.

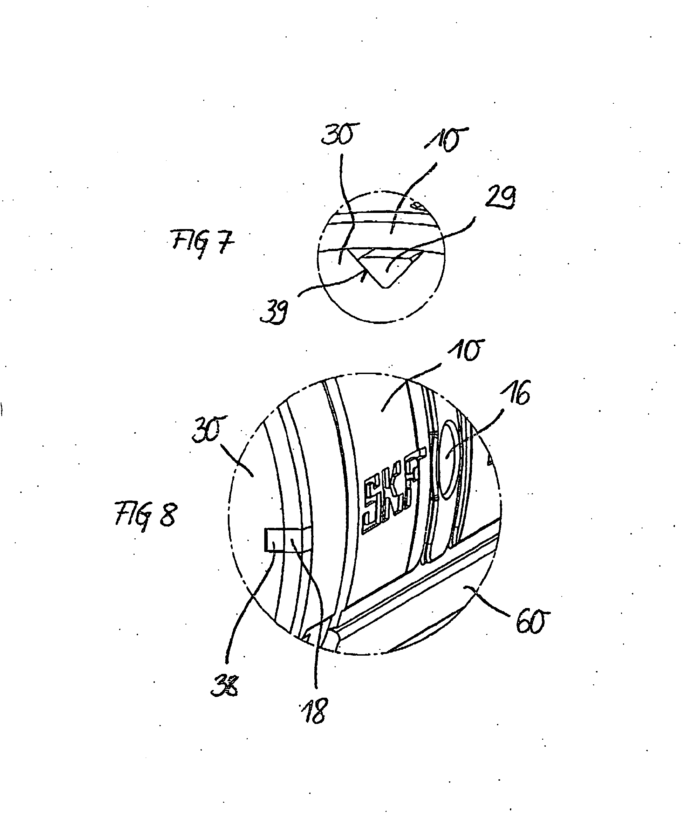

Weiterhin ist das Linearkugellager für eine vorgebbare, an einer bestimmten Umfangsstelle im wesentlichen senkrecht zum Zylindermantel stehende Hauptlastrichtung ausgebildet, die ebenfalls an der Stirnseite des Linearkugellagers durch eine Markierung gekennzeichnet ist. Dabei wird die Markierung durch einen axial vorstehenden Fortsatz 29 am Umlenkelement 20 realisiert, der in eine entsprechende Ausnehmung 39 des Deckelements 30 eingreift. Dabei sind insbesondere das Deckelement 30 und das Umlenkelement 20 unterschiedlich farbig ausgebildet, so dass die Markierung besonders gut erkennbar ist. Auch diese Markierung erleichtert dabei den bezüglich der Hauptlastrichtung richtigen Einbau des Linearkugellagers. Die Figuren 7 und 8 zeigen dabei noch einmal in der Figur 6 mit A und B bezeichnete Ausschnittsvergrößerungen der Stirnseite im Bereich der Markierungen 18 und 38.

Die Elemente 10, 20 und 30 sind insbesondere spritzgusstechnisch aus einem Kunststoff hergestellt. Dabei sind insbesondere das Umlenkelement 20 und das Deckclement 30 in axialer Richtung frei von Hinterschneidungen ausgebildet, was deren spritzgusstechnische Herstellung besonders einfach und damit kostengünstig ermöglicht. Aufwendige Schieber am Spritzgusswerkzeug sind damit mit Vorteil nicht erforderlich. Auch das Grundelement ist diesbezüglich mit besonderem Vorteil derart gestaltet, dass es innen ausschließlich axial entformbar ist und nur nach außen radial entformt werden muss. Damit kann ebenfalls ein einfach aufgebautes Spritzgusswerkzeug zum Einsatz kommen, was sich wiederum positiv auf die Kostenposition auswirkt. Besonders hervorzuheben ist dabei, dass die Herstellung mit besonderem Vorteil ohne eine Zwangsentformung auskommt.

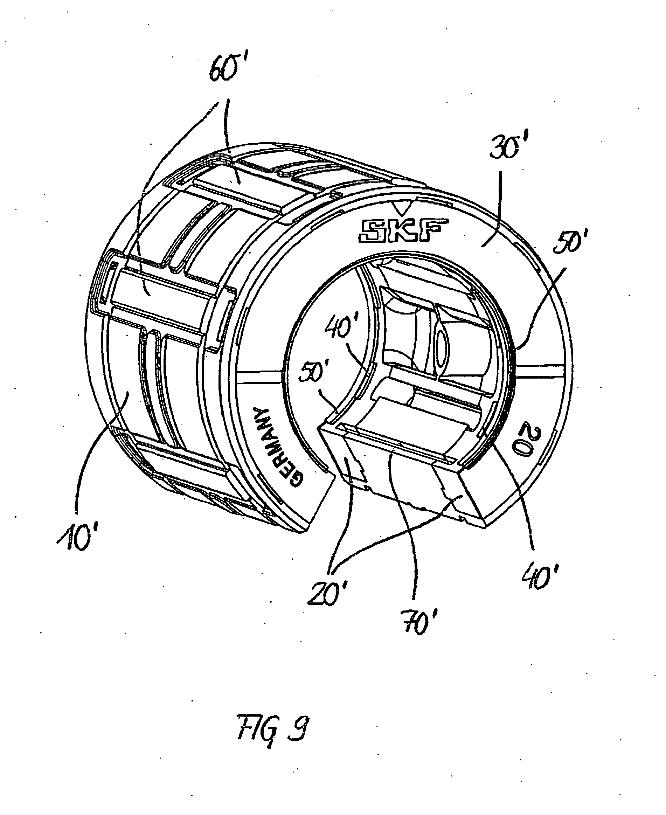

Die Figur 9 zeigt als ein weiteres Ausführungsbeispiel der Erfindung in perspektivischer Ansicht ein Linearkugellager, das anders als das Linearkugellager der Figuren 1 bis 8 in Umfangsrichtung nicht in sich hohlzylinderartig geschlossen ausgebildet ist, sondern der Hohlzylinder in einem sektorartigen Umfangsabschnitt mit einer Durchbrechung ausgebildet ist, die die volle Wandstärke und die gesamte Längsausdehnung des Linearkugellagers erfasst. Das Linearkugellager der Figur 9 ist dabei ähnlich dem Linearkugellager der Figuren 1 bis 8 aus den dort bezeichneten Elementen 10', 20' und 30' zusammengesetzt. Dabei umfassen das Grundelement 10' und die an beiden axialen Enden angeordneten Umlenkelemente 20' innenmantclscitig, beiderseits besagter Durchbrechung rillenartige Vertiefungen 70', in denen zum Abdichten gegenüber der Achse eine entsprechende Dichtung eingesetzt werden kann.

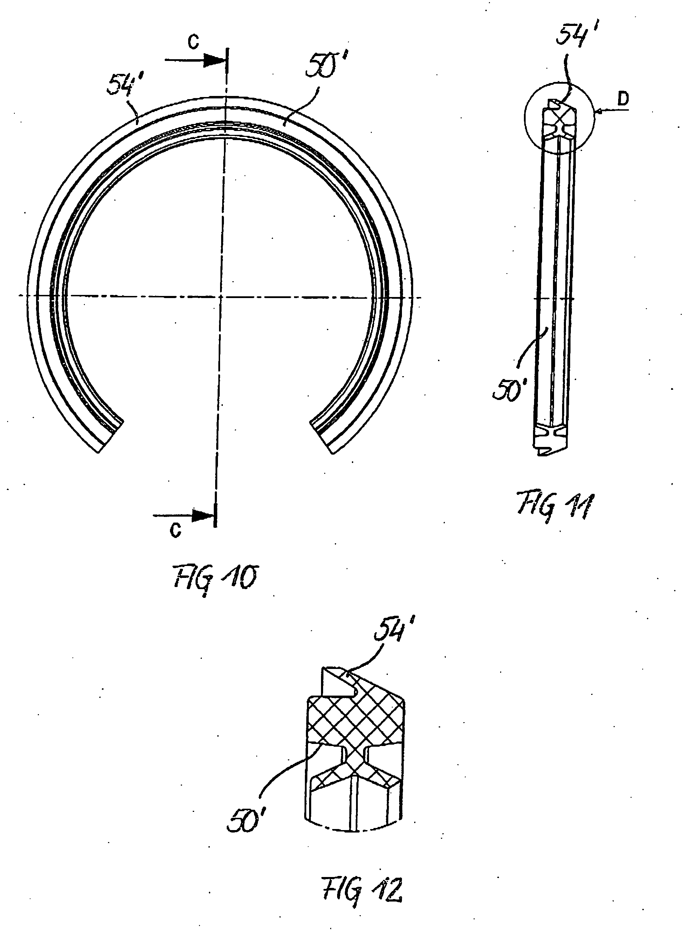

Weiterhin kann auch bei dem Linearkugellager der Figur 9 zwischen dem Umlenkelement 20' und dem Deckelement 30' eine Dichtung 50' eingesetzt sein, die sich von der Dichtung 50 gemäß der Figur 5 dadurch unterscheidet, dass die Dichtung 50' keinen in sich geschlossenen Ring ausbildet und dass auch außenmantelseitig anstelle des ringartig umlaufenden Wulstes 54 ein schräg nach außen auskragender Fortsatz 54' ausgebildet ist, was entsprechend in den Figuren 10 bis 12 dargestellt ist. Die Figur 10 zeigt dabei eine Frontansicht, die Figur 11 einen Längsschnitt entlang der Linie C-C der Figur 10 und die Figur 12 das in der Figur 10 mit D bezeichnete Detail der Dichtung 50'. Dabei bewirkt besagter schräg nach außen orientierter Fortsatz 54', dass die Dichtung 50' radial in Richtung zur Achse hin entsprechend angedrückt wird, so dass mit besonderem Vorteil dadurch eine besonders gute Dichtwirkung sichergestellt wird. Ansonsten gilt das vorausgehend zu den Figuren 1 bis 8 Beschriebene für die Figuren 9 bis 11 entsprechend, wobei bei den Figuren 9 bis 12 den Figuren 1 bis 8 entsprechende Bauelemente mit gleichen Bezugszeichennummern, ergänzt um einen Hochstrich, bezeichnet sind.

In anderen Ausführungen kann natürlich auch das Dichtungsdesign entsprechend den Figuren 10 bis 12 bei einem in Umfangsrichtung in sich geschlossenen ausgebildeten, hohlzylinderartigen Linearwälzlager angewandt sein und umgekehrt natürlich auch eine entsprechend der Figur 5 ausgebildete Dichtung bei einem in Umfangsrichtung in sich nicht geschlossen ausgebildeten Linearwälzlager zum Einsatz kommen.

### Bezugszeichenliste

- 10, 10': Grundelement
- 11: Auskragung
- 12: Öffnung
- 14: Führung
- 16: Vertiefung
- 18: Markierung

- 20,20': Umlenkelement
- 22: radialer Fortsatz
- 24: Führung
- 26: axialer Fortsatz
- 27: Nase
- 29: Fortsatz

- 30,30': Deckelement
- 32: radialer Fortsatz
- 37: Nase
- 38: Markierung
- 39: Ausnehmung

- 40, 40': Schmierstoffspeicher
- 46: Fortsatz

- 50,50': Dichtung
- 52: rechteckförmiger Grundbereich
- 54: Wulst
- 54': Fortsatz
- 56, 57: Dichtlippe

- 60,60': Laufbahneinlage

- 70': Vertiefung

## Patentansprüche

1. Linearwälzlager, beinhaltend folgende Merkmale:
- Ein hohlzylinderartig ausgebildetes Grundelement (10, 10'), das im wesentlichen geradlinige Führungen (14) für die belasteten und unbelasteten, zum endlosen Umlauf vorgesehene Wälzkörper umfasst,
- wenigstens ein ringartiges Umlenkelement (20, 20') mit wenigstens einer Umlenkführung (24) zwischen den geradlinigen Führungen (14),
- wenigstens ein ringartiges Deckelement (30, 30'),
- an wenigstens einem axialen Ende des Grundelements (10, 10') ist dieses im Bereich des Außenmantels mit einer derartigen axialen Auskragung (11) ausgebildet, dass in der Höhlung der Auskragung (11) nacheinander das Umlenkelement (20, 20') und das Deckelelement (30, 30') anordenbar sind,
- das Linearwälzlager ist für eine vorgebbare, an einer ersten Umfangsstelle im wesentlichen senkrecht zum Hohlzylindermantel stehende Hauptlastrichtung ausgebildet, **dadurch gekennzeichnet, dass**
- das Umlenkelement (20, 20') einen axialen Fortsatz (29), der bestimmungsgemäß zum Eingreifen in eine entsprechende Ausnehmung (39) am Deckelement (30, 30') vorgesehen ist und der als eine erste Markierung die erste Umfangsstelle anzeigt, umfasst,
- das Grundelement (10, 10') an einer zweiten Umfangsstelle für ein axial- und/oder verdrehsicheres Befestigen mit seiner Einbauumgebung und/oder ein Nachschmieren ausgebildet ist, und
- das Linearwälzlager an der Stirnseiten der ersten Markierung eine zweite Markierung (18, 38) aufweist, die die zweite Umfangsstelle anzeigt.

2. Linearwälzlager nach Anspruch 1, wobei der Fortsatz (29) und die Ausnehmung (39) mit einem dreieckförmigen Querschnitt ausgebildet sind.

3. Linearwälzlager nach einem der Ansprüche 1 oder 2, wobei wenigstens zwei der Elemente (10, 10', 20, 20', 30, 30'), insbesondere das Umlenk- und das Deckelement (20, 20', 30, 30'), mit unterschiedlicher Farbe ausgebildet sind.

4. Linearwälzlager nach einem der Ansprüche 1 bis 3, wobei das Grundelement (10, 10') und/oder das Deckelement (30, 30') stirnseitig mit der zweiten Markierung (18, 38) ausgebildet sind.

5. Linearwälzlager nach einem der Ansprüche 1 bis 4, wobei die Auskragung (11), das Umlenkelement (20, 20') und das Deckelement (30, 30') derart ausgebildet sind, dass die Elemente (20, 20', 30, 30') in die Auskragung (11) einschnappbar sind.

6. Linearwälzlager nach Anspruch 5, wobei die Elemente (20, 20', 30, 30') derart ausgebildet sind, dass die Elemente (20, 20', 30, 30') ausschließlich in einer vorgebbaren Verdrehposition zueinander einschnappbar sind.

7. Linearwälzlager nach einem der Ansprüche 1 bis 6, wobei wenigstens eines der Elemente (10, 10', 20, 20', 30, 30') aus Kunststoff ausgebildet ist.

8. Linearwälzlager nach einem der Ansprüche 1 bis 7, wobei das Umlenkelement (20, 20') und das Deckelelement (30, 30') in axialer Richtung frei von Hinterschneidungen ausgebildet sind.

9. Linearwälzlager nach einem der Ansprüche 1 bis 8, wobei wenigstens eines der Elemente (10, 10', 20, 20', 30, 30') durch ein Spritzgießen hergestellt ist.

10. Linearwälzlager nach einem der Ansprüche 1 bis 9, wobei die Wälzkörper als Kugeln ausgebildet sind.

11. Linearwälzlager nach einem der Ansprüche 1 bis 10, wobei die Elemente (10, 20, 30) in Umfangsrichtung in sich geschlossen ausgebildet sind.

12. Linearwälzlager nach einem der Ansprüche 1 bis 10, wobei die Elemente (10', 20', 30') in einem übereinstimmenden, sektorartigen Umfangsabschnitt mit einer Durchbrechung ausgebildet sind, die die volle Wandstärke und die gesamte Längsausdehnung erfasst.

## Claims

1. Linear anti-friction bearing, containing the following features:
- a hollow-cylindrically configured basic element (10, 10') which comprises substantially rectilinear guides (14) for the loaded and unloaded rolling bodies which are provided for endless circulation,
- at least one ring-like deflecting element (20, 20') with at least one deflecting guide (24) between the rectilinear guides (14),
- at least one ring-like covering element (30, 30'),
- at at least one axial end of the basic element (10, 10'), the latter is configured in the region of the outer shell with an axial bulge (11) which is such that the deflecting element (20, 20') and the covering element (30, 30') can be arranged one after another in the cavity of the bulge (11),
- the linear anti-friction bearing is configured for a predefinable main load direction which lies substantially perpendicularly with respect to the hollow-cylindrical shell at a first circumferential point, **characterized in that**
- the deflecting element (20, 20') comprises an axial projection (29) which is provided as intended for engagement into a corresponding recess (39) on the covering element (30, 30') and indicates the first circumferential point as a first marking,
- the basic element (10, 10') is configured at a second circumferential point for axially and/or rotationally secure fastening to its installation surroundings and/or for relubrication, and
- the linear anti-friction bearing has a second marking (18, 38) on the end sides of the first marking, which second marking (18, 38) indicates the second circumferential point.

2. Linear anti-friction bearing according to Claim 1, the projection (29) and the recess (39) being configured with a triangular cross section.

3. Linear anti-friction bearing according to either of Claims 1 and 2, at least two of the elements (10, 10', 20, 20', 30, 30'), in particular the deflecting element and the covering element (20, 20', 30, 30'), being configured in a different colour.

4. Linear anti-friction bearing according to one of Claims 1 to 3, the basic element (10, 10') and/or the covering element (30, 30') being configured on the end side with the second marking (18, 38).

5. Linear anti-friction bearing according to one of Claims 1 to 4, the bulge (11), the deflecting element (20, 20') and the covering element (30, 30') being configured in such a way that the elements (20, 20', 30, 30') can be snapped into the bulge (11).

6. Linear anti-friction bearing according to Claim 5, the elements (20, 20', 30, 30') being configured in such a way that the elements (20, 20', 30, 30') can be snapped in exclusively in a predefinable rotational position with respect to one another.

7. Linear anti-friction bearing according to one of Claims 1 to 6, at least one of the elements (10, 10', 20, 20', 30, 30') being configured from plastic.

8. Linear anti-friction bearing according to one of Claims 1 to 7, the deflecting element (20, 20') and the covering element (30, 30') being configured such that they are free of undercuts in the axial direction.

9. Linear anti-friction bearing according to one of Claims 1 to 8, at least one of the elements (10, 10', 20, 20', 30, 30') being produced by way of an injection-moulding process.

10. Linear anti-friction bearing according to one of Claims 1 to 9, the rolling bodies being configured as balls.

11. Linear anti-friction bearing according to one of Claims 1 to 10, the elements (10, 20, 30) being configured so as to be closed in themselves in the circumferential direction.

12. Linear anti-friction bearing according to one of Claims 1 to 10, the elements (10', 20', 30'), being configured in a coinciding, sector-like circumferential section with an aperture which covers the full wall thickness and the entire longitudinal extent.

## Revendications

1. Palier à roulement linéaire contenant les caractéristiques suivantes :
- un élément de base réalisé sous forme cylindrique creuse (10, 10') qui comprend des guides essentiellement linéaires (14) pour les corps de roulement prévus pour circuler sans fin, sollicités et non sollicités,
- au moins un élément déflecteur annulaire (20, 20') avec au moins un guide déflecteur (24) entre les guides linéaires (14),
- au moins un élément de recouvrement annulaire (30, 30'),
- à au moins une extrémité axiale de l'élément de base (10, 10'), celui-ci est réalisé dans la région de l'enveloppe extérieure avec une partie saillante axiale (11) telle que l'élément déflecteur (20, 20') et l'élément de recouvrement (30, 30') puissent être disposés l'un derrière l'autre dans la cavité de la partie saillante (11),
- le panier à roulement linéaire est réalisé pour une direction de charge principale prédéfinissable essentiellement perpendiculaire à l'enveloppe cylindrique creuse en un premier emplacement périphérique,
**caractérisé en ce que**
- l'élément déflecteur (20, 20') comprend une saillie axiale (29) qui est prévue, de manière conforme aux exigences, pour venir en prise dans un évidement correspondant (39) sur l'élément de recouvrement (30, 30') et qui indique sous forme de premier marquage le premier emplacement périphérique,
- l'élément de base (10, 10') est réalisé en un deuxième emplacement périphérique en vue d'une fixation fixée axialement et/ou en rotation avec son environnement de montage et/ou d'une post-lubrification, et
- le palier à roulement linéaire présente, sur les côtés frontaux du premier marquage, un deuxième marquage (18, 38) qui indique le deuxième emplacement périphérique.

2. Palier à roulement linéaire selon la revendication 1, dans lequel la saillie (29) et l'évidement (39) sont réalisés avec une section transversale de forme triangulaire.

3. Palier à roulement linéaire selon l'une quelconque des revendications 1 ou 2, dans lequel au moins deux des éléments (10, 10', 20, 20', 30, 30'), en particulier l'élément déflecteur et l'élément de recouvrement (20, 20', 30, 30') sont réalisés en différentes couleurs.

4. Palier à roulement linéaire selon l'une quelconque des revendications 1 à 3, dans lequel l'élément de base (10, 10') et/ou l'élément de recouvrement (30, 30') sont réalisés sur le côté frontal avec le deuxième marquage (18, 38).

5. Palier à roulement linéaire selon l'une quelconque des revendications 1 à 4, dans lequel la partie saillante (11), l'élément déflecteur (20, 20') et l'élément de recouvrement (30, 30') sont réalisés de telle sorte que les éléments (20, 20', 30, 30') puissent être encliquetés dans la partie saillante (11).

6. Palier à roulement linéaire selon la revendication 5, dans lequel les éléments (20, 20', 30, 30') sont réalisés de telle sorte que les éléments (20, 20', 30, 30') puissent être encliquetés les uns par rapport aux autres exclusivement dans une position de rotation prédéfinissable.

7. Palier à roulement linéaire selon l'une quelconque des revendications 1 à 6, dans lequel au moins un des éléments (10, 10', 20, 20', 30, 30') est réalisé en plastique.

8. Palier à roulement linéaire selon l'une quelconque des revendications 1 à 7, dans lequel l'élément déflecteur (20, 20') et l'élément de recouvrement (30, 30') sont réalisés dans la direction axiale de manière exempte de contre-dépouilles.

9. Palier à roulement linéaire selon l'une quelconque des revendications 1 à 8, dans lequel au moins l'un des éléments (10, 10', 20, 20', 30, 30') est fabriqué par moulage par injection.

10. Palier à roulement linéaire selon l'une quelconque des revendications 1 à 9, dans lequel les corps de roulement sont réalisés sous forme de billes.

11. Palier à roulement linéaire selon l'une quelconque des revendications 1 à 10, dans lequel les éléments (10, 20, 30) sont réalisés de manière fermée en soi dans la direction périphérique.

12. Palier à roulement linéaire selon l'une quelconque des revendications 1 à 10, dans lequel les éléments (10', 20', 30') sont réalisés dans une portion périphérique coïncidente, en forme de secteur, avec un orifice qui couvre toute l'épaisseur de paroi et toute l'étendue longitudinale.
